# EUROPEAN PATENT APPLICATION

(11) **EP 4 650 954 A1**
(43) Date of publication of application: **19.11.2025**
(21) Application number: 24176615.3
(22) Date of filing: 17.05.2024
(51) Int. Cl.: G06F 9/445, G01D 7/00, G01R 13/02

(54) **DEVICE CONFIGURATION USING VIRTUAL OR AUGMENTED REALITY**

(71) Applicant: Rohde & Schwarz GmbH & Co. KG, 81671 München (DE)
(72) Inventor: OHLEN, Volker, 85652 Pliening (DE); RADDINO, Daniela, 80469 München (DE); ROESNER, Thomas, 81671 München (DE); EL-MASRI, Rabih, 81925 München (DE); POWELL, William, 81245 München (DE)
(74) Representative: Kehl, Ascherl, Liebhoff & Ettmayr Patentanwälte Partnerschaft mbB

(57) **Abstract**

The present disclosure provides a method for configuring an electronic system, the method comprising identifying at least one component of the electronic system, displaying the at least one identified component in a virtual or augmented reality display to a user, acquiring a user input with respect to content displayed in the virtual or augmented reality display, and showing configuration options for a respective one of the at least one identified component, if the user input refers to the respective component. Further, the present disclosure comprises a configuration system.

## Description

### TECHNICAL FIELD

The disclosure relates to a method and a respective configuration system.

### BACKGROUND

Although applicable to any type of configurable electronic device, the present disclosure will mainly be described in conjunction with configuration of RF electronic devices.

In the rapidly evolving telecommunications industry, managing complex signaling scenarios has become a significant challenge. The traditional methods of setting up or configuring these scenarios in electronic devices are often time-consuming, labor-intensive, and prone to errors. These methods typically involve manual configuration and calibration of such devices, which can be particularly problematic in environments with high signal complexity. Furthermore, the increasing demand for high-speed, high-capacity networks has led to the use of more complex signaling techniques, exacerbating the problem.

Accordingly, there is a need for improving device or system configuration for electronic devices.

### SUMMARY

The above stated problem is solved by the features of the independent claims. It is understood, that independent claims of a claim category may be formed in analogy to the dependent claims of another claim category.

Accordingly, it is provided:

A method for configuring an electronic system, the method comprising identifying at least one component of the electronic system, displaying the at least one identified component in a virtual or augmented reality display to a user, acquiring a user input with respect to content displayed in the virtual or augmented reality display, and showing configuration options for a respective one of the at least one identified component, if the user input refers to the respective component.

Further, it is provided:

A configuration system for configuring an electronic system, the configuration system comprising at least one virtual or augmented reality display, and a computer coupled to the virtual or augmented reality display, wherein the computer is configured to identify at least one component of the electronic system, display the at least one identified component in the at least one virtual or augmented reality display to a user, acquire a user input with respect to content displayed in the virtual or augmented reality display, and show configuration options for a respective component of the electronic system, if the user input refers to the respective component of the electronic system.

The present disclosure is based on the finding that there is a need for a more efficient and accurate method of setting up complex signaling scenarios or electronic systems and perform measurements in such electronic systems. The current solutions do not adequately address this problem, as they do not effectively reduce the complexity of the configuration and measurement setup process. This leads to increased operational costs and decreased network performance.

Moreover, displaying information where needed is restricted to screens in current scenarios.

The present disclosure acknowledges that extended reality (XR) technology, like virtual reality or augmented reality, may help to address these challenges

Therefore, the present disclosure provides the method for configuring an electronic system. The method comprises identifying at least one component of the electronic system, displaying the at least one identified component in a virtual or augmented reality display to a user, acquiring a user input with respect to content displayed in the virtual or augmented reality display, and showing configuration options for a respective one of the at least one identified component, if the user input refers to the respective component.

The method according to the present disclosure may be performed with a configuration system according to the present disclosure. Such a configuration system comprises a computer, and at least one virtual or augmented reality display.

The term computer in this regard is to be understood as any type of general-purpose computing device or network comprising multiple such computing devices. Such a network may also comprise any other type of computing device that may provide data or any other input for performing the method according to the present disclosure.

The at least one virtual or augmented reality display may be provided for at least one user. Of course, multiple virtual or augmented reality displays may be provided for multiple users at the same time. The single virtual or augmented reality displays may each be controlled by the computer. In embodiments, each virtual or augmented reality display may comprise a local control computer that performs motion tracking and controls the display in the virtual or augmented reality display. Such a local control computer may then interface with any other computer to receive data required to perform at least part of the method according to the present disclosure.

In embodiments, such a local computer may perform the method according to the present disclosure in a self-contained manner i.e., no connection to other computers or computer systems is required. In such embodiments, a respective application may be installed on the local control computer that comprises all required computer readable instructions i.e., software, and all required information e.g., in a local database.

The electronic system may comprise any number of different components. For example, the electronic system may comprise a single component, like a microcontroller, or multiple components in a single housing, like the internal electronics of an RF electronic device arranged in a respective housing. The electronic system may also comprise multiple devices, each with a dedicated housing, that may be coupled to each other wirelessly or via cable-based connections.

The method starts with identifying at least one component of the electronic system. Identifying in this regard refers to identifying at least one of the type of the component, and the position of the component.

The method further comprises displaying the at least one identified component in a virtual or augmented reality display to a user. In the virtual or augmented reality that is created for a user with the virtual or augmented reality display, objects may be placed in a virtual space at a position that corresponds to the position of the object in reality. Alternatively, in the virtual or augmented reality, the objects may be displayed at user-configurable positions.

In an embodiment, a virtual representation of the electronic system with all the identified components may be created with the aid of the virtual or augmented reality display in virtual or augmented reality. The user may then freely position such a representation in the virtual or augmented space.

In another embodiment, in the virtual or augmented reality display the reality may be overlaid with a virtual representation of at least some of the components of the electronic system. In such embodiments, the reality may be directly viewed by the user, and the overlay may be created e.g., on a semi-transparent surface in front of the user's eye, or a video feed may be recorded of the reality and may be shown on a display to the user, wherein the virtual content may be overlaid in the video feed.

In the method, a user input with respect to content displayed in the virtual or augmented reality display is acquired. Such user input may be acquired in any adequate way. For example, the hands of the user may be tracked, or the user may be provided with respective input devices that he may hold in his hands. Further, user input may be provided as spoken words or instructions, or may be provided with a mouse, a keyboard or the like. In embodiments, any single one or any combination of such user input methods may be used.

A user may of course perform any kind of input actions in a virtual or augmented reality surrounding. In the case of the method according to the present invention, if a user performs an input with regard to a respective component of the electronic system, configuration options for the respective component are shown to the user.

Performing a user input that refers to a component in the context of the present disclosure may refer to selecting the representation of the component in the virtual or augmented reality. As explained above, any input means that is adequate for use in the virtual or augmented reality surrounding may be used.

The user may, with the help of the method or the configuration system according to the present disclosure, easily view the arrangement of all components in the electronic system, and also directly identify possible configuration options of the single components.

In an exemplary case, the electronic system may comprise a complex electronic circuit provided on a circuit board or PCB, and may comprise a plurality of different components. At least some of these components may be configurable. For example, microcontrollers or other logic devices may comprise a plurality of configurable options. Further, different components in such an electronic system may be interconnected via analog signal lines or data connections and exchange analog signals and digital data during operation.

With the help of the method or configuration system according to the present disclosure, a user may be provided with information about the configurable parameters of the components of such an electronic system easily and spatially directly linked to the respective component and visualize a respective scenario.

The method and the configuration system may support or implement further functions of the user. The user may in embodiments e.g., be allowed to summon different windows comprising different kinds of information regarding the components or the electronic system with gestures. The user may in embodiments also wear haptic-feedback gloves any may receive feedback via such gloves.

In embodiments, multiple users may meet in a virtual environment. While no one or only one or some of the users may actually have the electronic system at hand, for other users, the electronic system may be provided as purely virtual electronic system and/or video stream of the electronic system in such a virtual environment. In RF scenarios, multiple, possibly moving, electronic systems or devices of an electronic system may be shown in such a virtual environment.

In embodiments, in the virtual or augmented reality surrounding the user may move through the electronic system. Especially in RF scenarios, the virtual or augmented reality surrounding may also comprise buildings, or measurement chambers that a user may virtually move in.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to independent claim 1 can be combined in all variations with each other and the disclosure of the description is not limited to the claim dependencies as specified in the claim set. Further, the features of the dependent claims referring to independent claim 1 may be combined with any of the features of the other independent claims or the dependent claims relating to any one of the other independent claims. In a respective method, respective method steps may perform the function of the respective apparatus elements, and in a respective apparatus, respective apparatus elements may perform the respective method steps.

In an embodiment, which can be combined with all other embodiments mentioned above or below, the method may further comprise receiving a selection of at least one of the shown configuration options from the user, receiving a user provided configuration value for the selected at least one of the shown configuration options from the user, and storing the received user provided configuration value for the selected at least one of the shown configuration options.

As indicated above, a plurality of configuration options may be available for a respective component of the electronic system. The user may select any one of the configurable options in the virtual or augmented reality surrounding created with the help of the virtual or augmented reality display, and may provide a respective value for the configurable option. The user provided value may then be stored.

The stored configuration values may be stored in a database, and any stored configuration value that was provided by the user may later be used for configuring the actual component in the electronic system.

In a further embodiment, which can be combined with all other embodiments mentioned above or below, showing the configuration options may be performed in the virtual or augmented reality display at a position corresponding to the respective component, and receiving a selection, and receiving a user provided configuration value may be performed in the virtual or augmented reality display by acquiring user input on the configuration options shown in the virtual or augmented reality display.

The configuration options may be shown e.g., in the form of a table that may be provided floating over the respective component in the virtual or augmented reality surrounding created for the user. Of course, linking graphical elements, like arrows may be provided between such a table and the component. The user input regarding the selection and actual values for the single configuration options may be received in this virtual or augmented reality surrounding at the position of the table. A user may e.g., select a field of the table, and input a respective value. In other embodiments, any other graphical representation may be provided other than a table. For example, multi-level menus may be arranged at the respective position.

In another further embodiment, which can be combined with all other embodiments mentioned above or below, the method may further comprise generating a computer program product comprising the user provided configuration values received from the user for operating at least a respective one of the at least one component.

As indicated above, the user-provided values for the single configuration options may be stored for later use. One possible application for the user-provided values of the configuration options comprises generating a computer program product e.g., a firmware, for at least one of the components of the electronic system based on the user-provided values. The user-provided values may also be sent directly to the electronic system.

In an exemplary use of the method, a component of the electronic system may comprise a processor or SoC. The user-provided values may refer to configuration options like the processor speed, input-/output-interface configurations, communication interface configurations, and many other configurable options such a processor may provide.

Based on the user-provided values, a firmware for the processor or SoC may be configured and compiled, such that the firmware may be loaded into the memory of the processor or SoC or a memory coupled to the processor or SoC. The processor or SoC may then execute the instructions provided in the firmware. Of course, such a firmware may not only comprise the user-provided values, but also any other functionality that a programmer may add to the firmware.

In another embodiment, which can be combined with all other embodiments mentioned above or below, identifying at least one component of the electronic system may at least one of comprise performing a visual identification of the at least one component, or comprise performing a visual identification of the electronic system, and loading information about the at least one component of the electronic system from a component database, or comprise visually identifying a position for the at least one component, and requesting the user to identify the respective type of component.

Visually identifying refers to the component being identified via a camera and a respective artificial vision algorithm to identify the specific type of component. The camera may e.g., record an image or video of the electronic system and the respective components. In embodiments, the artificial vision algorithm may comprise OCR, optical character recognition, to read an imprint on the component. The artificial vision algorithm may also comprise an artificial intelligence algorithm trained to identify components of the electronic system in an image.

The artificial vision algorithm may in addition to the components also identify the layout of the components, and the chipsets used in the electronic system. After identifying the layout of the components, a virtual version or augmented version of the components may be overlaid over the components at the respective positions of the real components in the virtual or augmented reality surrounding.

In addition, or instead of directly identifying single components of the electronic system, in an embodiment, the electronic system may be visually identified. After identifying the electronic system, further information or data about the electronic system, especially about the components of the electronic system may be loaded e.g., from a database or from a server provided by the manufacture of the component. Such a database may comprise detailed information about the electronic system and all the components in the electronic system. If the electronic system comprises a complex electronic circuit, the database may e.g., comprise a circuit diagram, and detailed explanations or meta-data of all components in the electronic system.

If a component may not be identified or multiple candidate components are identified, the position of the component, and therefore, the component may be visually identified in the virtual or augmented reality surrounding, and the user may be requested to input or identify the correct type of component.

In embodiments, multiple electronic systems may be provided, or the electronic system may comprise sub-systems. In such embodiments, the multiple electronic systems, or the sub-systems may be handled at the same time with the method or configuration system according to the present disclosure.

As indicated above, the user may be tracked. If the components, and especially the layout of the components is identified, the user may also be provided with a warning based on the user tracking if the user is going to touch a point or component of the electronic system that might get damaged.

In a further embodiment, which can be combined with all other embodiments mentioned above or below, the at least one configuration option may comprise at least one of hardware configuration options, communication interface configuration options, software configuration options, and a position of the at least one component in the electronic system.

In an embodiment, which can be combined with all other embodiments mentioned above or below, the electronic system may comprise at least two components. The method may further comprise indicating in the virtual or augmented reality display connections between the at least two components.

If multiple components are present in the electronic system, at least some of the components may be coupled to each other. In the virtual or augmented reality surrounding such connections may be visualized e.g., by lines that couple the components to each other.

Such visual connections in the virtual or augmented reality surrounding help the user to identify signal and data paths in the electronic system.

In a further embodiment, which can be combined with all other embodiments mentioned above or below, indicating connections may comprise visually connecting the at least two components according to the received user provided configuration values.

The user-provided values for different configuration options may influence the signals of data that is transmitted between two components of the electronic system.

The user may for example configure data transmission or signal generation parameters of the electronic system. The user may e.g., configure an SPI Bus between two components of the electronic system. The visual indication of the connection between these components may reflect the fact that the bus is an SPI bus. Such a visual connection may also reflect the configuration of the bus e.g., the clock frequency that is configured for the bus. Generally, the visual indication may not only indicate the type of connection, but if appropriate also any meta-data for that connection.

In a further embodiment, which can be combined with all other embodiments mentioned above or below, indicating connections may comprise visually connecting the at least two components according to a component layout of the electronic system.

If, as indicated above, a circuit diagram or schematic is available, the connection lines may follow the traces in the real electronic system, also in the virtual or augmented reality surrounding. This will help the user to map the information from the virtual or augmented reality surrounding to the real or actual electronic system.

In an embodiment, which can be combined with all other embodiments mentioned above or below, indicating connections may comprise showing a warning with the connections if incompatible user provided configuration values are received from the user for the respective configuration options.

As indicated above, the electronic system may comprise interconnected components that may output and receive signals or digital data. If signal or data generating components and receiving components may be configured by the user, the user may provide inadequate or incompatible configurations. Such configurations may be indicated by a warning e.g., a respective symbol, in the virtual or augmented reality surrounding.

For example, in the above example of the SPI bus, if two components coupled to the SPI bus are configured with different SPI parameters that would not allow the two components to exchange data via such an SPI bus, the warning may be shown.

Providing a warning if incompatible settings are provided by the user is a kind of static analysis. If measurements are performed in the electronic system, a dynamic analysis may be performed of the electronic system e.g., with live data.

In another embodiment, which can be combined with all other embodiments mentioned above or below, the at least one configuration option may comprise at least one of at least one antenna definition, and a position of at least one antenna component in the electronic system, wherein the method may further comprise showing a radiation pattern for the at least one antenna component in the virtual or augmented reality display.

The antenna definition may define a type of antenna provided in the electronic system. In addition, or as alternative, the position of the antenna defined by the antenna definition or another predefined or identified antenna in the electronic system may be defined by the user.

The method may comprise simulating or calculating or loading from a server the radiation pattern for the antenna, and showing that radiation pattern in the virtual or augmented reality surrounding. This may be performed for multiple antennas in the electronic system.

The antenna or radiation pattern may also be seen as a kind of connection that is shown in the virtual or augmented reality surrounding.

As indicated above, the method may comprise indicating connections and meta-data for the connections. Therefore, together with the radiation patterns of the antenna, additional information may be displayed to the user. Such additional information may refer to the RF standard the antenna is sending or receiving data with, for example LTE, WIFI, Bluetooth, and the like. The RF standard may e.g., be indicated as word or by coloring the radiation pattern accordingly.

In case that a configurable beam-forming antenna is used, the currently configured beam pattern may be shown to the user. For other components, the currently set data or signal direction of a bi-directional data port may be shown. Consequently, a kind of RF debugging may be performed.

With multiple antennas in an electronic system e.g., in a UE or cellular phone, a graphical indication may be given or shown about which antennas are currently used.

Any type of meta-data that is shown in the virtual or augmented reality surrounding may be shown as words, by symbols or by coloring elements accordingly in the virtual or augmented reality surrounding for any component or connection.

In embodiments, as described e.g., below, the method may comprise performing measurements or simulations of the electronic system and showing the results of the measurements or simulations in the virtual or augmented reality surrounding. Simulated signals or data streams may be shown independently or as overlay to each other.

If the electronic system is a user equipment, UE, for communication in a cellular telephony and data network, the UE may e.g., freely select an uplink path. Such a selected uplink path may be shown in the virtual or augmented reality surrounding to the user. Further, the currently used channels may be shown or the change of channels during time may be shown in a kind of history.

In the case of a UE, it may also be shown in the virtual or augmented reality surrounding if the UE performs WIFI offloading.

In embodiments with RF signals (simulated or measured) being shown in the virtual or augmented reality surrounding, the user may position his viewport at any adequate positions, for example, not only the position of the UE but also the position of a receiving base station, with multiple UEs being present. This will allow the user to view the beams as they arrive at the base station from the UEs.

In a further embodiment, which can be combined with all other embodiments mentioned above or below, displaying the at least one identified component in a virtual or augmented reality display may comprise at least one of displaying an image recorded of the component, displaying a virtual image of the component, and overlaying a virtual image of the component at a position in the virtual or augmented reality display that corresponds to the position of the component in the electronic system.

If a recorded image of the component is displayed, the user is present with a real image of the actual electronic system, which will help the user to map the virtual or augmented reality surrounding with the real world.

By showing a virtual image or virtual representation of the component, the user may be presented with a more structured view, since in the virtual image the level of detail may be adapted. For example, a virtual image of a microcontroller may only show the pins of the microcontroller that are currently in use or are connected to traces on a circuit board.

The virtual image may not only be shown for single components. Instead, the virtual image may also be generated for the electronic system. The virtual image may also be overlaid on the recorded image. By overlaying at least one virtual component over a recorded image of the electronic system, a kind of X-Ray view may be provided. For example, a UE or mobile phone may be viewed laying with the back side up. Over an image recorded of this UE, virtual components may be overlaid, such that it looks like the back side of the UE is open and the user may view the internals i.e., the components, of the UE without actually opening the UE. The user may also manipulate e.g., move or turn around, the virtual representation of the UE. Such functions explained exemplarily for a UE herein may of course be applied to any other type of electronic system.

Further, additional information may be overlaid on the recorded or the virtual image.

If combined with measurements, as indicated below, a heat map may be overlaid over the recorded or virtual images. Such a heat map may refer to measured heat values. The heat map may also be derived for other data, like a data rate on a bus, or within a communication component. Power consumption of single components may also be overlaid over the recorded or virtual images.

With measurements being performed, anomalies in the signals or data transferred in the electronic system may be visually indicated in the electronic system at the place of the respective failure. A zoom onto the position at which the error occurred may be performed in the virtual or augmented reality surrounding for the user, and a respective error may be logged.

Further, it may be shown which protocols are implemented or used on what interfaces of the electronic system.

In an embodiment, which can be combined with all other embodiments mentioned above or below, the method may further comprise displaying at least one system value in the virtual or augmented reality display at a position corresponding to the occurrence of the at least one system value in the electronic system.

System values may comprise physical values, especially an electrical physical value, a magnetic physical value, or an electro-magnetic physical value. Other values, like temperature, and pressure are also possible. Such physical values may be measured by respective sensors or may be provided by the electronic system.

In embodiments, measurement application devices may be a sub-system of the electronic system, or may be a further electronic system in a multi-electronic system environment. In such embodiments, the user input, and especially values for configuration options provided by the user, may also refer to the configuration and control of the measurement application devices.

With measurement application devices as part of the electronic system, representations of the measured signals may be shown to the user in the virtual or augmented reality surrounding. For example, virtual screens of measurement application devices may be shown in the virtual or augmented reality surrounding at positions that relate to the traces that carry the respective signals. Multiple displays of measurement signals may be provided at the same time.

In embodiments, the currently measured signals may be shown in real time. In other examples, stored measurement values may be shown, and the user may be allowed to scroll through the stored measurement values or replay the stored measurement values in original speed or with reduced speed, or step through time-slices of the stored signals.

In embodiments, the measured values or the virtual screen of the respective measurement application device will be shown only if the user activates the respective screen e.g., by clicking the respective port or component in the virtual or augmented reality surrounding.

Further, with measurement application devices as part of the electronic system, the correct cabling of the measurement application devices to the other elements e.g., a device under test as sub-system of the electronic system, may be indicated to the user. The method may also comprise, and the configuration system may be configured to identify the cabling e.g., via a camera system that the user performed in the real electronic system, and visually indicate possible errors in the virtual or augmented reality display. Further, the user may be provided with a warning prior to installing a cabling that might potentially destroy the respective component.

If a specific test sequence is performed with the measurement application devices, and re-cabling is required, the user may receive an indication of the required re-cabling in the virtual or augmented reality surrounding. For example, the respective ports or connectors of the devices under test and the measurement application devices may be marked.

Further, with measurement application devices as part of the electronic system, the method may be performed at least in part by a measurement application device that may be a configuration system according to the present disclosure.

System values may also comprise data values, especially values of data of a data stream that is transmitted in the electronic system.

In another embodiment, which can be combined with all other embodiments mentioned above or below, the method may further comprise at least one of measuring the at least one physical value in the electronic system, and simulating the at least one physical value.

As indicated above, measurement application devices may be provided as part of the electronic system or as sub-systems of the electronic system.

A measurement application device according to the present disclosure may comprise any device that may be used in a measurement application to acquire an input signal or to generate an output signal, or to perform additional or supporting functions in a measurement application. A measurement application device may also comprise or be implemented as program application or program applications, also called measurement program application or measurement program applications, that may be executed on a computer device and that may communicate with other measurement application devices in order to perform a measurement task. A measurement application, also called measurement setup, may e.g., comprise at least one or multiple different measurement application devices for performing electric, magnetic, or electromagnetic measurements, especially on single devices under test. Such electric, magnetic, or electromagnetic measurements may e.g., be performed in a measurement laboratory or in a production facility in the respective production line. An exemplary measurement application or measurement setup may serve to qualify the single devices under test i.e., to determine the proper electrical operation of the respective devices under test.

Measurement application devices to this end may comprise at least one signal acquisition section for acquiring electric, magnetic, or electromagnetic signals to be measured from a device under test, or at least one signal generation section for generating electric, magnetic, or electromagnetic signals that may be provided to the device under test. Such a signal acquisition section may comprise, but is not limited to, a front-end for acquiring, filtering, and attenuating or amplifying electrical signals. The signal generation section may comprise, but is not limited to, respective signal generators, amplifiers, and filters. In embodiments, the signal acquisition is performed via the signal acquisition section in a wired or contact-based manner or fashion. To this end, a respective measurement probe may be coupled to the measurement application device via a respective cable. In embodiments, the signal generation and emission is performed via the signal generation section in a wired or contact-based manner or fashion. To this end, a respective signal output probe may be coupled to the measurement application device via a respective cable, or the signal may be output directly via the cable e.g., to a device under test.

Further, when acquiring signals, measurement application devices may comprise a signal processing section that may process the acquired signals. Processing may comprise converting the acquired signals from analog to digital signals, and any other type of digital signal processing, for example, converting signals from the time-domain into the frequency-domain.

The measurement application devices may also comprise a user interface to display the acquired signals to a user and allow a user to control the measurement application devices. Of course, a housing may be provided that comprises the elements of the measurement application device. It is understood, that further elements, like power supply circuitry, and communication interfaces may be provided.

A measurement application device may be a stand-alone device that may be operated without any further element in a measurement application to perform tests on a device under test. Of course, communication capabilities may also be provided for the measurement application device to interact with other measurement application devices.

A measurement application device may comprise, for example, a signal acquisition device e.g., an oscilloscope, especially a digital oscilloscope, a spectrum analyzer, or a vector network analyzer. Such a measurement application device may also comprise a signal generation device e.g., a signal generator, especially an arbitrary signal generator, also called arbitrary waveform generator, or a vector signal generator. Further possible measurement application devices comprise devices like calibration standards, or measurement probe tips.

Of course, at least some of the possible functions, like signal acquisition and signal generation, may be combined in a single measurement application device.

In embodiments, the measurement application device may comprise pure data acquisition devices that are capable of acquiring an input signal and of providing the acquired input signal as digital input signal to a respective data storage or application server. Such pure data acquisition devices not necessarily comprise a user interface or display. Instead, such pure data acquisition devices may be controlled remotely e.g., via a respective data interface, like a network interface or a USB interface. The same applies to pure signal generation devices that may generate an output signal without comprising any user interface or configuration input elements. Instead, such signal generation devices may be operated remotely via a data connection.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a flow diagram of an embodiment of a method according to the present disclosure;
Figure 2 shows a flow diagram of another embodiment of a method according to the present disclosure;
Figure 3 shows a flow diagram of another embodiment of a method according to the present disclosure;
Figure 4 shows a block diagram of an embodiment of a configuration system according to the present disclosure;
Figure 5 shows a block diagram of an embodiment of a measurement application device that may be used with a method according to the present disclosure; and
Figure 6 shows a block diagram of another embodiment of a measurement application device that may be used with a method according to the present disclosure.

In the figures like reference signs denote like elements unless stated otherwise.

### DETAILED DESCRIPTION OF THE DRAWINGS

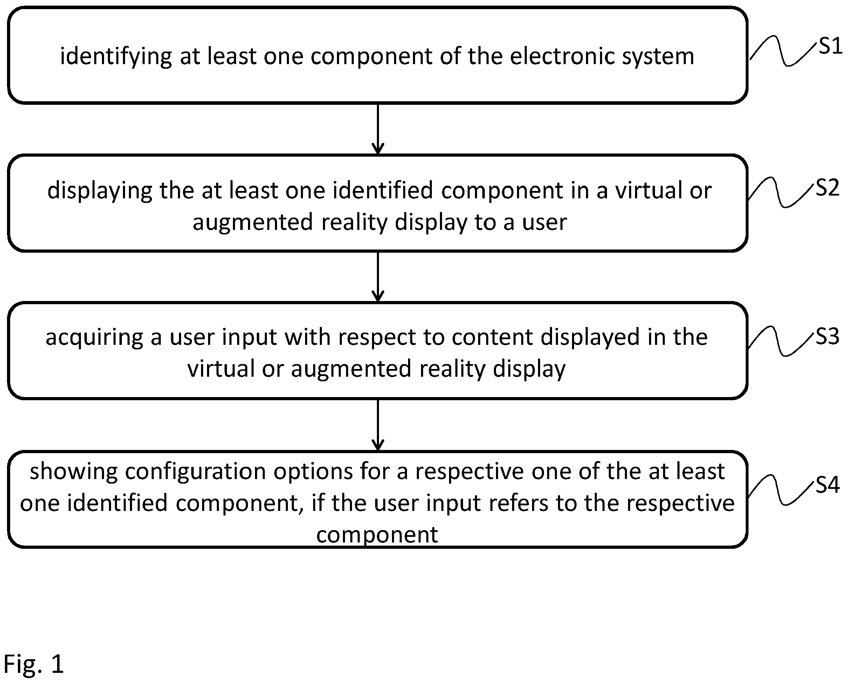

Figure 1 shows a flow diagram of a method for configuring an electronic system. The method comprises identifying S1 at least one component of the electronic system, displaying S2 the at least one identified component in a virtual or augmented reality display to a user, acquiring S3 a user input with respect to content displayed in the virtual or augmented reality display, and showing S4 configuration options for a respective one of the at least one identified component, if the user input refers to the respective component.

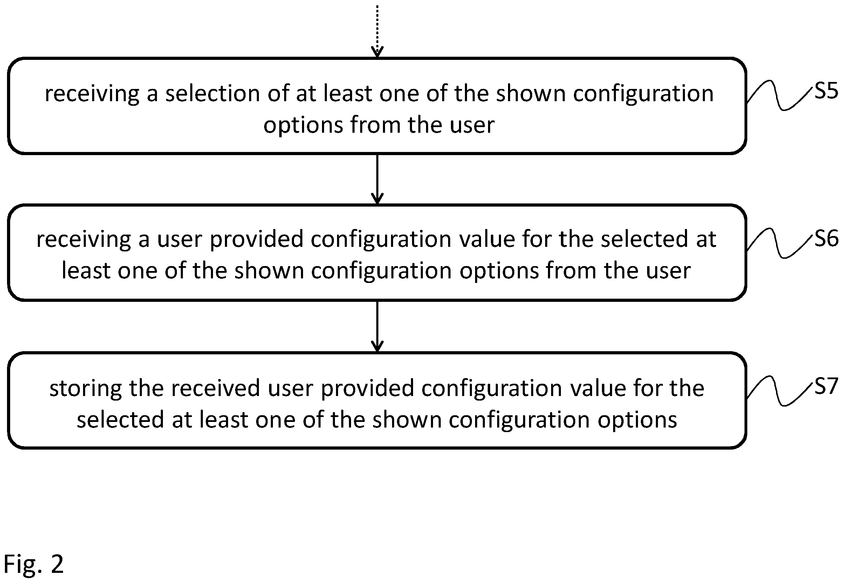

Figure 2 shows a flow diagram of another method according to the present disclosure that is based on the method shown in figure 1. Although not shown, the dotted arrow arriving at step S5 indicates that the method of figure 2 also includes all steps of the method of figure 1.

Further, the method of figure 2 comprises receiving S5 a selection of at least one of the shown configuration options from the user, receiving S6 a user provided configuration value for the selected at least one of the shown configuration options from the user, and S7 storing the received user provided configuration value for the selected at least one of the shown configuration options.

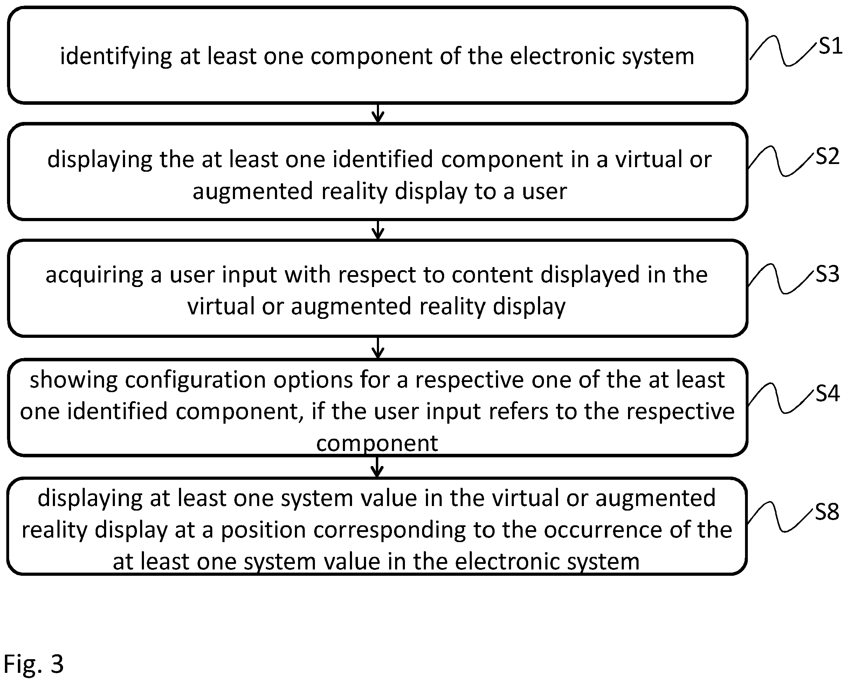

Figure 3 shows a flow diagram of another method according to the present disclosure that is based on the method of figure 1. The method of figure 3, therefore, comprises identifying S1 at least one component of the electronic system, displaying S2 the at least one identified component in a virtual or augmented reality display to a user, acquiring S3 a user input with respect to content displayed in the virtual or augmented reality display, and showing S4 configuration options for a respective one of the at least one identified component, if the user input refers to the respective component.

The method further comprises displaying S8 at least one system value in the virtual or augmented reality display at a position corresponding to the occurrence of the at least one system value in the electronic system.

The system value may e.g., be loaded from a server. Although not explicitly shown, the method may further comprise measuring the at least one system value as a physical value in the electronic system, or simulating the at least one system value as physical value.

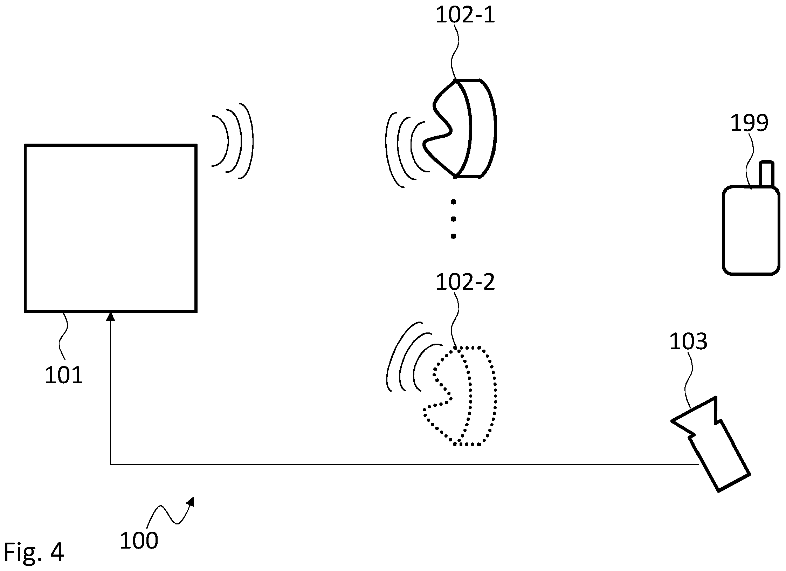

Figure 4 shows a block diagram a configuration system 100. The configuration system 100 comprises at least one virtual or augmented reality display 102-1, 102-2, and a computer 101 coupled to the virtual or augmented reality display 102-1, 102-2. Further, a UE or cellular phone 199 is shown as a possible electronic system. Finally, a sensor, shown as camera 103, is provided and coupled to computer 101.

The camera 103 serves to monitor movements for the user, record images of the cellular phone 199, and generally provide feedback about the real surroundings of the user. Although not shown, further input devices e.g., a keyboard, a mouse, a touchscreen, a voice input interface, and virtual or augmented reality input devices may be provided.

The computer 101 is configured to identify at least one component of the electronic system, display the at least one identified component in the at least one virtual or augmented reality display to a user, acquire a user input with respect to content displayed in the virtual or augmented reality display, and show configuration options for a respective component of the electronic system, if the user input refers to the respective component of the electronic system.

Generally, the computer 101 is configured to perform any one of the steps of the method according to the present disclosure.

The computer 101 may be configured to control the virtual or augmented reality display to show the configuration options at a position corresponding to the respective component, and receive the selection, and the user provided configuration value via the virtual or augmented reality display by acquiring user input on the configuration options shown in the virtual or augmented reality display.

Further, the computer 101 may further be configured to generate a computer 101 program product comprising the user provided configuration values received from the user for operating at least one component of the electronic system.

The computer 101 may be configured to identifying at least one component of the electronic system by at least one of performing a visual identification of the at least one component, performing a visual identification of the electronic system, and loading information about the at least one component of the electronic system from a component database, visually identifying a position for the at least one component, and requesting the user to identify the respective type of component.

The at least one configuration option may comprise at least one of hardware configuration options, communication interface configuration options, software configuration options, and a position of the at least one component in the electronic system.

The electronic system may further comprise at least two components, and the computer 101 may be further configured to control the virtual or augmented reality display to indicate connections between the at least two components according to the user provided configuration values received for the respective configuration options.

The computer 101 may be configured to control the virtual or augmented reality display to at least one of visually connect the at least two components according to the received user provided configuration values, and visually connect the at least two components according to a component layout of the electronic system.

The computer 101 may further be configured to control the virtual or augmented reality display to show a warning with the connections if incompatible user provided configuration values are received from the user for the respective configuration options.

The at least one configuration option may comprise a position of at least one antenna component in the electronic system, and the computer 101 may be further configured to control the virtual or augmented reality display to show a radiation pattern for the at least one antenna component in the virtual or augmented reality display.

When displaying the at least one identified component in a virtual or augmented reality display, the computer 101 may further be configured to at least one of display an image recorded of the component, display a virtual image of the component, and overlay a virtual image of the component at a position in the virtual or augmented reality display that corresponds to the position of the component in the electronic system.

The computer 101 may further be configured to control the virtual or augmented reality display to display at least one system value in the virtual or augmented reality display at a position corresponding to the occurrence of the at least one system value in the electronic system.

The configuration system may further comprise at least one of a measurement application device configured to measure the at least one physical value in the electronic system, and a simulator configured to simulate the at least one physical value.

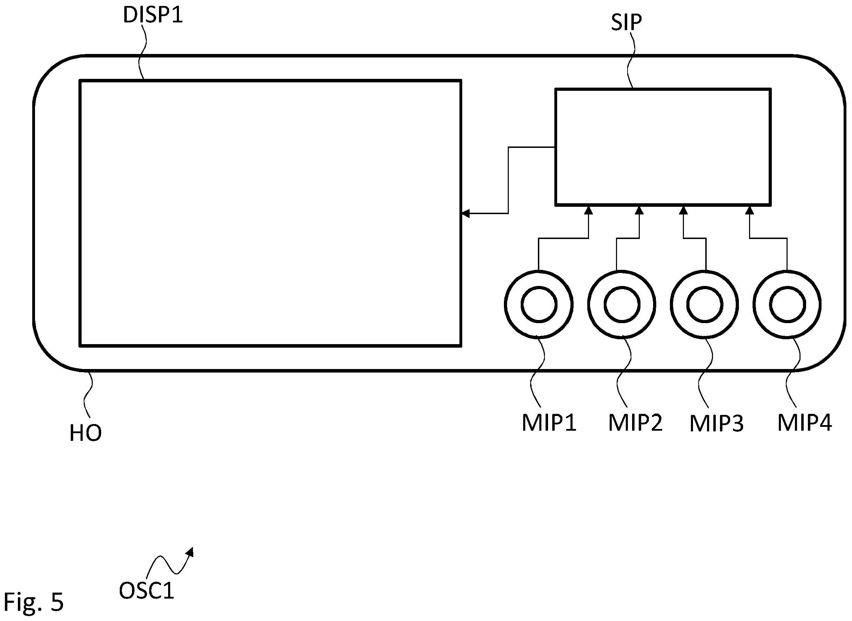

Figure 5 shows a block diagram of an oscilloscope OSC1 that may be used with an embodiment of a configuration system according to the present disclosure, or that may perform measurements or execute at least some step of a method according to the present disclosure.

The oscilloscope OSC1 comprises a housing HO that accommodates four measurement inputs MIP1, MIP2, MIP3, MIP4 that are coupled to a signal processor SIP for processing any measured signals. The signal processor SIP is coupled to a display DISP1 for displaying the measured signals to a user.

Although not explicitly shown, it is understood, that the oscilloscope OSC1 may also comprise signal outputs. Such signal outputs may for example serve to output calibration signals. Such calibration signals allow calibrating the measurement setup prior to performing any measurement. The process of calibrating and correcting any measurement signals based on the calibration may also be called de-embedding and may comprise applying respective algorithms on the measured signals.

In the oscilloscope OSC1 the signal processor SIP or an additional processing element may perform the function of the computer according to the present disclosure, or may implement the method. Of course, a communication interface may be provided in the oscilloscope OSC1 for communication with other measurement application devices.

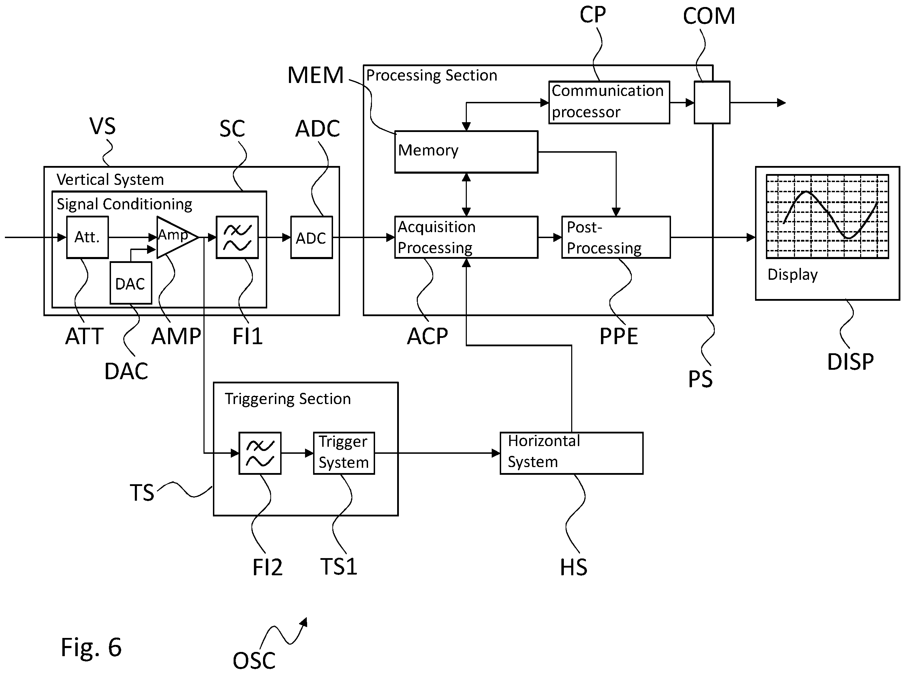

Figure 6 shows a block diagram of an oscilloscope OSC that may be an implementation of a measurement application device for use with a method or configuration system according to the present disclosure, or that may implement at least some functions of the method according to the present disclosure. The oscilloscope OSC is implemented as a digital oscilloscope. However, the present disclosure may also be implemented with any other type of oscilloscope.

The oscilloscope OSC exemplarily comprises five general sections, the vertical system VS, the triggering section TS, the horizontal system HS, the processing section PS and the display DISP. It is understood, that the partitioning into five general sections is a logical partitioning and does not limit the placement and implementation of any of the elements of the oscilloscope OSC in any way.

The vertical system VS mainly serves for offsetting, attenuating and amplifying a signal to be acquired. The signal may for example be modified to fit in the available space on the display DISP or to comprise a vertical size as configured by a user.

To this end, the vertical system VS comprises a signal conditioning section SC with an attenuator ATT and a digital-to-analog-converter DAC that are coupled to an amplifier AMP. The amplifier AMP is coupled to a filter F11, which in the shown example is provided as a low pass filter. The vertical system VS also comprises an analog-to-digital converter ADC that receives the output from the filter FI1 and converts the received analog signal into a digital signal.

The attenuator ATT and the amplifier AMP serve to scale the amplitude of the signal to be acquired to match the operation range of the analog-to-digital converter ADC. The digital-to-analog-converter DAC serves to modify the DC component of the input signal to be acquired to match the operation range of the analog-to-digital converter ADC. The filter FI1 serves to filter out unwanted high frequency components of the signal to be acquired.

The triggering section TS operates on the signal as provided by the amplifier AMP. The triggering section TS comprises a filter F12, which in this embodiment is implemented as a low pass filter. The filter FI2 is coupled to a trigger system TS1.

The triggering section TS serves to capture predefined signal events and allows the horizontal system HS to e.g., display a stable view of a repeating waveform, or to simply display waveform sections that comprise the respective signal event. It is understood, that the predefined signal event may be configured by a user via a user input of the oscilloscope OSC.

Possible predefined signal events may for example include, but are not limited to, when the signal crosses a predefined trigger threshold in a predefined direction i.e., with a rising or falling slope. Such a trigger condition is also called an edge trigger. Another trigger condition is called "glitch triggering" and triggers, when a pulse occurs in the signal to be acquired that has a width that is greater than or less than a predefined amount of time.

In order to allow an exact matching of the trigger event and the waveform that is shown on the display DISP, a common time base may be provided for the analog-to-digital converter ADC and the trigger system TS1.

It is understood, that although not explicitly shown, the trigger system TS1 may comprise at least one of configurable voltage comparators for setting the trigger threshold voltage, fixed voltage sources for setting the required slope, respective logic gates like e.g., a XOR gate, and FlipFlops to generate the triggering signal.

The triggering section TS is exemplarily provided as an analog trigger section. It is understood, that the oscilloscope OSC may also be provided with a digital triggering section. Such a digital triggering section will not operate on the analog signal as provided by the amplifier AMP but will operate on the digital signal as provided by the analog-to-digital converter ADC.

A digital triggering section may comprise a processing element, like a processor, a DSP, a CPLD, an ASIC or an FPGA to implement digital algorithms that detect a valid trigger event.

The horizontal system HS is coupled to the output of the trigger system TS1 and mainly serves to position and scale the signal to be acquired horizontally on the display DISP.

The oscilloscope OSC further comprises a processing section PS that implements digital signal processing and data storage for the oscilloscope OSC. The processing section PS comprises an acquisition processing element ACP that is couple to the output of the analog-to-digital converter ADC and the output of the horizontal system HS as well as to a memory MEM and a post processing element PPE.

The acquisition processing element ACP manages the acquisition of digital data from the analog-to-digital converter ADC and the storage of the data in the memory MEM. The acquisition processing element ACP may for example comprise a processing element with a digital interface to the analog-to-digital converter ADC2 and a digital interface to the memory MEM. The processing element may for example comprise a microcontroller, a DSP, a CPLD, an ASIC or an FPGA with respective interfaces. In a microcontroller or DSP, the functionality of the acquisition processing element ACP may be implemented as computer readable instructions that are executed by a CPU. In a CPLD or FPGA the functionality of the acquisition processing element ACP may be configured in to the CPLD or FPGA opposed to software being executed by a processor.

The processing section PS further comprises a communication processor CP and a communication interface COM.

The communication processor CP may be a device that manages data transfer to and from the oscilloscope OSC. The communication interface COM for any adequate communication standard like for example, Ethernet, WIFI, Bluetooth, NFC, an infra-red communication standard, and a visible-light communication standard.

The communication processor CP is coupled to the memory MEM and may use the memory MEM to store and retrieve data.

Of course, the communication processor CP may also be coupled to any other element of the oscilloscope OSC to retrieve device data or to provide device data that is received from the management server.

The post processing element PPE may be controlled by the acquisition processing element ACP and may access the memory MEM to retrieve data that is to be displayed on the display DISP. The post processing element PPE may condition the data stored in the memory MEM such that the display DISP may show the data e.g., as waveform to a user. The post processing element PPE may also realize analysis functions like cursors, waveform measurements, histograms, or math functions.

The display DISP controls all aspects of signal representation to a user, although not explicitly shown, may comprise any component that is required to receive data to be displayed and control a display device to display the data as required.

It is understood, that even if it is not shown, the oscilloscope OSC may also comprise a user interface for a user to interact with the oscilloscope OSC. Such a user interface may comprise dedicated input elements like for example knobs and switches. At least in part the user interface may also be provided as a touch sensitive display device.

In the oscilloscope OSC, any one of the processing elements in the processing section PS or an additional processing element may perform functions of the configuration system, especially the computer, according to the present disclosure, or may implement at least some functions of the method according to the present disclosure.

It is understood, that all elements of the oscilloscope OSC that perform digital data processing may be provided as dedicated elements. As alternative, at least some of the above-described functions may be implemented in a single hardware element, like for example a microcontroller, DSP, CPLD or FPGA. Generally, the above-describe logical functions may be implemented in any adequate hardware element of the oscilloscope OSC and not necessarily need to be partitioned into the different sections explained above.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- S1, S2, S3, S4, S5, S6, S7, S8: method steps

- 100: configuration system
- 101: computer
- 102-1, 102-2: virtual or augmented reality display
- 103: camera

- 199: electronic system

- OSC1: oscilloscope
- HO: housing
- MIP1, MIP2, MIP3, MIP4: measurement input
- SIP: signal processing
- DISP1: display

- OSC: oscilloscope
- VS: vertical system
- SC: signal conditioning
- ATT: attenuator
- DAC1: analog-to-digital converter
- AMP: amplifier
- FI1: filter
- DAC: digital-to-analog converter
- ADC: analog-to-digital converter

- TS: triggering section
- AMP2: amplifier
- FI2: filter
- TS1: trigger system

- HS: horizontal system

- PS: processing section
- ACP: acquisition processing element
- MEM: memory
- PPE: post processing element

- DISP: display

## Claims

1. Method for configuring an electronic system (199), the method comprising:
Identifying (S1) at least one component of the electronic system (199);
displaying (S2) the at least one identified component in a virtual or augmented reality display (102-1, 102-2) to a user;
acquiring (S3) a user input with respect to content displayed in the virtual or augmented reality display (102-1, 102-2); and
showing (S4) configuration options for a respective one of the at least one identified component, if the user input refers to the respective component.

2. Method according to claim 1, further comprising:
receiving (S5) a selection of at least one of the shown configuration options from the user;
receiving (S6) a user provided configuration value for the selected at least one of the shown configuration options from the user; and
storing (S7) the received user provided configuration value for the selected at least one of the shown configuration options.

3. Method according to claim 2, wherein showing (S4) the configuration options is performed in the virtual or augmented reality display (102-1, 102-2) at a position corresponding to the respective component; and
wherein receiving (S5) a selection, and receiving (S6) a user provided configuration value is performed in the virtual or augmented reality display (102-1, 102-2) by acquiring user input on the configuration options shown in the virtual or augmented reality display (102-1, 102-2).

4. Method according to any one of the preceding claims 2 and 3, further comprising:
generating a computer program product comprising the user provided configuration values received from the user for operating at least a respective one of the at least one component.

5. Method according to any one of the preceding claims, wherein identifying (S1) at least one component of the electronic system (199) comprises at least one of:
performing a visual identification of the at least one component;
performing a visual identification of the electronic system (199), and loading information about the at least one component of the electronic system (199) from a component database;
visually identifying a position for the at least one component, and requesting the user to identify the respective type of component.

6. Method according to any one of the preceding claims, wherein the at least one configuration option comprises at least one of:
hardware configuration options;
communication interface configuration options;
software configuration options; and
a position of the at least one component in the electronic system (199).

7. Method according to any one of the preceding claims 2-6, wherein the electronic system (199) comprises at least two components, the method further comprising:
indicating in the virtual or augmented reality display (102-1, 102-2) connections between the at least two components.

8. Method according to claim 7, wherein indicating connections comprises at least one of:
visually connecting the at least two components according to the received user provided configuration values; and
visually connecting the at least two components according to a component layout of the electronic system (199).

9. Method according to any one of the preceding claims 7 and 8, wherein indicating connections comprises showing a warning with the connections if incompatible user provided configuration values are received from the user for the respective configuration options.

10. Method according to any one of the preceding claims, wherein the at least one configuration option comprises at least one of at least one antenna definition, and a position of at least one antenna component in the electronic system (199); and wherein the method further comprises showing a radiation pattern for the at least one antenna component in the virtual or augmented reality display (102-1, 102-2).

11. Method according to any one of the preceding claims, wherein displaying (S2) the at least one identified component in a virtual or augmented reality display (102-1, 102-2) comprises at least one of:
displaying an image recorded of the component;
displaying a virtual image of the component; and
overlaying a virtual image of the component at a position in the virtual or augmented reality display (102-1, 102-2) that corresponds to the position of the component in the electronic system (199).

12. Method according to any one of the preceding claims, further comprising:
displaying (S8) at least one system value in the virtual or augmented reality display (102-1, 102-2) at a position corresponding to the occurrence of the at least one system value in the electronic system (199).

13. Method according to claim 12, further comprising at least one of:
measuring the at least one system value as a physical value in the electronic system (199); and
simulating the at least one system value as physical value.

14. Configuration system (100) for configuring an electronic system (199), the configuration system (100) comprising:
at least one virtual or augmented reality display (102-1, 102-2); and
a computer (101) coupled to the virtual or augmented reality display (102-1, 102-2),
wherein the computer (101) is configured to:
identify at least one component of the electronic system (199);
display the at least one identified component in the at least one virtual or augmented reality display (102-1, 102-2) to a user;
acquire a user input with respect to content displayed in the virtual or augmented reality display (102-1, 102-2); and
show configuration options for a respective component of the electronic system (199), if the user input refers to the respective component of the electronic system (199).

15. Configuration system (100) according to claim 14, wherein the computer (101) is further configured to:
receive a selection of at least one of the shown configuration options from the user;
receive a user provided configuration value for the selected at least one of the shown configuration options from the user; and
store the received user provided configuration value for the selected at least one of the shown configuration options.

16. Configuration system (100) according to any one of the preceding claims 14 - 15, wherein the computer (101) is configured to:
control the virtual or augmented reality display (102-1, 102-2) to show the configuration options at a position corresponding to the respective component; and
receive the selection, and the user provided configuration value via the virtual or augmented reality display (102-1, 102-2) by acquiring user input on the configuration options shown in the virtual or augmented reality display (102-1, 102-2).

17. Configuration system (100) according to any one of the preceding claims 15 - 16, wherein the computer (101) is further configured to:
generate a computer (101) program product comprising the user provided configuration values received from the user for operating at least one component of the electronic system (199).

18. Configuration system (100) according to any one of the preceding claims 14 - 17, wherein the computer (101) is configured to identify at least one component of the electronic system (199) by at least one of:
performing a visual identification of the at least one component;
performing a visual identification of the electronic system (199), and loading information about the at least one component of the electronic system (199) from a component database;
visually identifying a position for the at least one component, and requesting the user to identify the respective type of component.

19. Configuration system (100) according to any one of the preceding claims 14 - 18, wherein the at least one configuration option comprises at least one of:
hardware configuration options;
communication interface configuration options;
software configuration options; and
a position of the at least one component in the electronic system (199).

20. Configuration system (100) according to any one of the preceding claims 16 - 19, wherein the electronic system (199) comprises at least two components, and wherein the computer (101) is further configured to:
control the virtual or augmented reality display (102-1, 102-2) to indicate connections between the at least two components according to the user provided configuration values received for the respective configuration options.

21. Configuration system (100) according to claim 20, wherein the computer (101) is configured to control the virtual or augmented reality display (102-1, 102-2) to at least one of:
visually connect the at least two components according to the received user provided configuration values; and
visually connect the at least two components according to a component layout of the electronic system (199).

22. Configuration system (100) according to any one of the preceding claims 20 - 21, wherein the computer (101) is further configured to control the virtual or augmented reality display (102-1, 102-2) to show a warning with the connections if incompatible user provided configuration values are received from the user for the respective configuration options.

23. Configuration system (100) according to any one of the preceding claims 14 - 22, wherein the at least one configuration option comprises a position of at least one antenna component in the electronic system (199); and
wherein the computer (101) is further configured to control the virtual or augmented reality display (102-1, 102-2) to show a radiation pattern for the at least one antenna component in the virtual or augmented reality display (102-1, 102-2).

24. Configuration system (100) according to any one of the preceding claims 14 - 23, wherein when displaying the at least one identified component in a virtual or augmented reality display (102-1, 102-2), the computer (101) is further configured to at least one of:
display an image recorded of the component;
display a virtual image of the component; and
overlay a virtual image of the component at a position in the virtual or augmented reality display (102-1, 102-2) that corresponds to the position of the component in the electronic system (199).

25. Configuration system (100) according to any one of the preceding claims 14 - 24, wherein the computer (101) is further configured to control the virtual or augmented reality display (102-1, 102-2) to:
display at least one system value in the virtual or augmented reality display (102-1, 102-2) at a position corresponding to the occurrence of the at least one system value in the electronic system (199).

26. Configuration system (100) according to claim 25, further comprising at least one of:
a measurement application device configured to measure the at least one physical value in the electronic system (199); and
a simulator configured to simulate the at least one physical value.
